# EUROPEAN PATENT APPLICATION

(11) **EP 4 300 700 A1**
(43) Date of publication of application: **03.01.2024**
(21) Application number: 21927839.7
(22) Date of filing: 25.02.2021
(51) Int. Cl.: H01M 50/528, H01M 50/533, H01M 50/536

(54) **BATTERY AND METHOD FOR MANUFACTURING BATTERY**

(71) Applicant: KABUSHIKI KAISHA TOSHIBA, Minato-ku Tokyo 105-0023 (JP)
(72) Inventor: YANO, Takuma, Tokyo 105-0023 (JP); MORITA, Shusuke, Tokyo 105-0023 (JP); ARAKI, Yoshiaki, Tokyo 105-0023 (JP)
(74) Representative: Hoffmann Eitle
(86) International application number: PCT/JP2021/007059
(87) International publication number: WO 2022/180737

(57) **Abstract**

In an embodiment, a battery includes a container member, an electrode terminal, an electrode group including a positive electrode and a negative electrode, a conductive member, a first recess and a second recess. Then electrode terminal is disposed in the container member. The electrode group is housed in an inner cavity of the container member, and includes a current collector and an active material-containing layer supported on the current collector. The current collector includes a current collecting tab on which the active material-containing layer is not supported. The conductive member electrically connects the electrode terminal and the current collecting tab. The first recess is recessed toward the conductive member in a connecting portion between the current collecting tab and the conductive member. The second recess is recessed toward the conductive member on an outer periphery side of the first recess. The second recess has a maximum recess depth smaller than a maximum recess depth of the first recess.

## Description

### FIELD

Embodiments of the present invention relate to a battery and a manufacturing method of the battery.

### BACKGROUND

As a lithium ion secondary battery, there is known a battery in which an electrode group including a positive electrode and a negative electrode is housed in an inner cavity of a container member. In this battery, an electrode terminal is disposed in the container member. Furthermore, the electrode group includes a current collector and an active material-containing layer supported on the current collector. The current collector includes a current collecting tab on which the active material-containing layer is not supported. The current collecting tab is electrically connected to the electrode terminal via a conductive material such as lead. Still further, a plurality of belt-shaped portions is stacked on the current collecting tab.

In manufacturing such a battery, a plurality of belt-shaped portions stacked in a current collecting tab is joined to a lead or the like by ultrasonic welding. That is, the plurality of belt-shaped portions stacked in the current collecting tab and the lead are transformed to be joined to each other. The joining is required to be performed without deteriorating the strength of the current collecting tab at the time of joining while maintaining durability such as vibration resistance.

### CITATION LIST

### PATENT LITERATURE

Patent Literature 1: Jpn. Pat. Appln. KOKAI Publication No. 2010-282846

### SUMMARY

### TECHNICAL PROBLEM

An object of the present invention is to provide a battery capable of preventing a decrease in strength of a current collecting tab due to joining and to provide a manufacturing method of the battery.

### SOLUTION TO PROBLEM

According to an embodiment, a battery includes a container member, an electrode terminal, an electrode group including a positive electrode and a negative electrode, a conductive member, a first recess and a second recess. Then electrode terminal is disposed in the container member. The electrode group is housed in an inner cavity of the container member, and includes a current collector and an active material-containing layer supported on the current collector. The current collector includes a current collecting tab on which the active material-containing layer is not supported. The conductive member electrically connects the electrode terminal and the current collecting tab. The first recess is recessed toward the conductive member in a connecting portion between the current collecting tab and the conductive member. The second recess is recessed toward the conductive member on an outer periphery side of the first recess. The second recess has a maximum recess depth smaller than a maximum recess depth of the first recess.

### BRIEF DESCRIPTION OF THE DRAWINGS

FIG. 1 is a perspective view schematically showing an example of a battery according to an embodiment.
FIG. 2 is a perspective view schematically showing a configuration of an electrode group in FIG. 1.
FIG. 3 is a schematic view showing a configuration of a current collecting tab of the electrode group in FIG. 1.
FIG. 4 is a cross-sectional view schematically showing a cross-section taken along line IV-IV in FIG. 3.
FIG. 5 is a cross-sectional view schematically showing a cross-section taken along line V-V in FIG. 3.
FIG. 6 is a cross-sectional view schematically showing a cross-section of an electrode group according to a modification of the embodiment.

### DETAILED DESCRIPTION

Hereinafter, an embodiment will be described with reference to the drawings.

### (Embodiment)

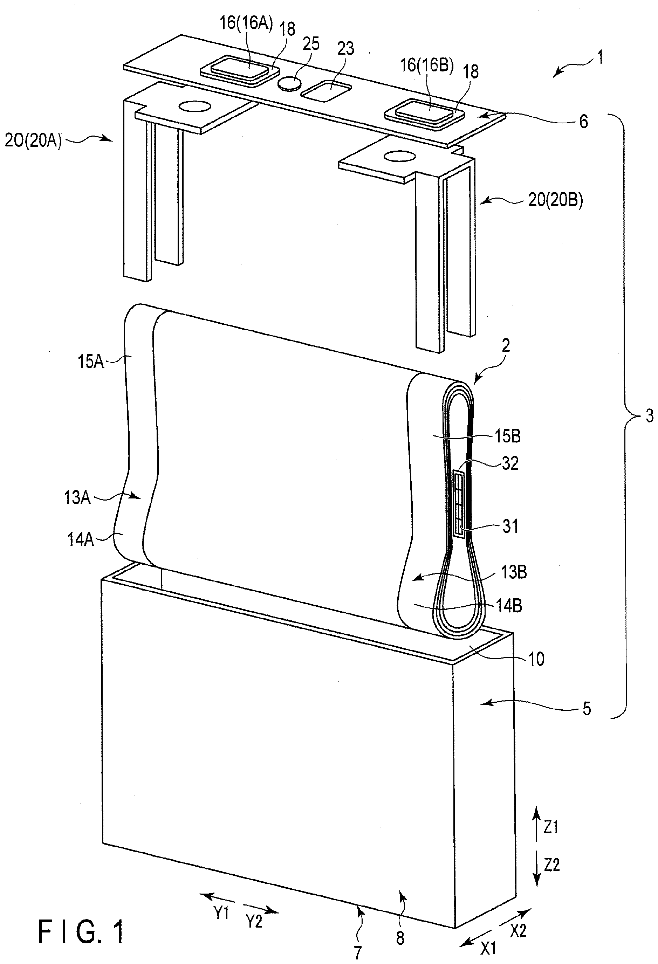

FIG. 1 shows a battery 1 according to an embodiment. As shown in FIG. 1, the battery 1 includes an electrode group 2 and a container member 3. The container member 3 includes an outer container 5 and a lid 6. The outer container 5 and the lid 6 are made of a metal such as aluminum, aluminum alloy, iron, copper, and stainless steel. In the battery 1 (outer container 5) herein, a depth direction (indicated by arrow X1 and arrow X2), a lateral direction (indicated by arrow Y1 and arrow Y2) intersecting (perpendicularly or substantially perpendicularly to) the depth direction, and a height direction (indicated by arrow Z1 and arrow Z2) intersecting (perpendicularly or substantially perpendicularly to) both the depth direction and the lateral direction are defined. Both the battery 1 and the outer container 5 have a dimension in the depth direction smaller than a dimension in the lateral direction and a dimension in the height direction. FIG. 1 is a perspective view showing each member being exploded.

The outer container 5 includes a bottom wall 7 and a peripheral wall 8. The bottom wall 7 and the peripheral wall 8 define an inner cavity 10 configured to house the electrode group 2. In the outer container 5, the inner cavity 10 is opened to the side opposite to the bottom wall 7 in the height direction. The lid 6 is attached to the peripheral wall 8 at an end opposite to the bottom wall 7. Accordingly, the lid 6 closes the opening of the inner cavity 10 of the outer container 5, and the lid 6 and the bottom wall 7 is opposed to each other having the inner cavity 10 interposed therebetween in the height direction.

The electrode group 2 includes a positive electrode 13A and a negative electrode 13B. In the electrode group 2, a separator (not shown) is interposed between the positive electrode 13A and the negative electrode 13B. The separator includes a material having an electrical insulation property and electrically insulates the positive electrode 13A from the negative electrode 13B.

The positive electrode 13A includes a positive electrode current collector 14A such as a positive electrode current collecting foil and a positive electrode active material-containing layer (not shown) supported on a surface of the positive electrode current collector 14A. The positive electrode current collector 14A is, for example, an aluminum foil or an aluminum alloy foil but is not limited thereto. The positive electrode current collector 14A has a thickness of about 10 µm to 20 µm. The positive electrode active material-containing layer includes a positive electrode active material. The positive electrode active material-containing layer may optionally contain a binder and an electro-conductive agent. Examples of the positive electrode active material include, but are not limited to, oxides, sulfides, and polymers capable of occluding and releasing lithium ions. The positive electrode current collector 14A includes a positive electrode current collecting tab 15A on which the positive electrode active material-containing layer is not supported.

The negative electrode 13B includes a negative electrode current collector 14B such as a negative electrode current collecting foil and a negative electrode active material-containing layer (not shown) supported on a surface of the negative electrode current collector 14B. The negative electrode current collector 14B is, for example, an aluminum foil, an aluminum alloy foil, or a copper foil but is not limited thereto. The negative electrode current collector 14B has a thickness of about 10 µm to 20 µm. The negative electrode active material-containing layer includes a negative electrode active material. The negative electrode active material layer may optionally contain a binder and an electro-conductive agent. Examples of the negative electrode active material include, but are not limited to, metal oxides, metal sulfides, metal nitrides, and carbon materials capable of occluding and releasing lithium ions. The negative electrode current collector 14B includes a negative electrode current collecting tab 15B on which the negative electrode active material-containing layer is not supported.

The electrode group 2 includes a pair of current collecting tabs 15, that is, the positive electrode current collecting tab 15A as one current collecting tab 15 and the negative electrode current collecting tab 15B as the other current collecting tab 15 different from the positive electrode current collecting tab 15A. In one example of the electrode group 2, the positive electrode 13A, the negative electrode 13B, and the separator are wound around a winding axis while the separator is sandwiched between the positive electrode active material-containing layer and the negative electrode active material-containing layer. In another example, the electrode group 2 has a stack structure in which a plurality of positive electrodes 13A and a plurality of negative electrodes 13B are stacked alternately, having a separator sandwiched between each positive electrode 13A and each negative electrode 13B. In the electrode group 2 according to the example in FIG. 1, the positive electrode current collecting tab 15A protrudes relative to the negative electrode 13B and the separator. The negative electrode current collecting tab 15B protrudes relative to the positive electrode 13A and the separator to a side opposite to a side toward which the positive electrode current collecting tab 15A protrudes. In the example in FIG. 1, inside the inner cavity 10 of the outer container 5, the pair of current collecting tabs 15 protrudes toward the peripheral wall 8.

In the inner cavity 10, an electrolytic solution (not shown) is held in the electrode group 2 (the electrode group 2 is impregnated with the electrolytic solution). The electrolytic solution may be a nonaqueous electrolytic solution having an electrolyte dissolved in an organic solvent or may be an aqueous electrolytic solution such as an aqueous solution. A gel electrolyte or a solid electrolyte may be used as a substitute for the electrolytic solution. When a solid electrolyte is employed as the electrolyte, instead of the separator, the solid electrolyte is interposed between the positive electrode 13A and the negative electrode 13B in the electrode group. In this case, the positive electrode 13A is electrically insulated from the negative electrode 13B by the solid electrolyte.

In the battery 1 according to the example in FIG. 1, a pair of electrode terminals 16 is attached to the outer surface of the lid 6. The electrode terminals 16 are mode of a conductive material such as a metal. One of electrode terminals 16 is a positive electrode terminal (16A) of the battery 1. The other of the pair of electrode terminals 16 different from the positive electrode terminal (16A) is a negative electrode terminal (16B) of the battery 1. The electrode terminals 16 are placed on the outer surface of the lid 6. That is, the pair of electrode terminals 16 is disposed in the container member 3. On the outer surface of the lid 6, an insulating member 18 is disposed between each of the electrode terminals 16 and the lid 6. Each of the electrode terminals 16 is electrically insulated from the lid 6 and the outer container 5 by the insulating member 18.

A pair of conductive members 20 is placed in the inner cavity 10 of the outer container 5. One of the pair of conductive members 20 is a positive electrode conductive member (20A). The other of the pair of conductive members 20 different from the positive electrode conductive member (20A) is a negative electrode conductive member (20B). The positive electrode current collecting tab 15A of the electrode group 2 is electrically connected to the positive electrode terminal 16A through at least the positive electrode conductive member 20A. The negative electrode current collecting tab 15B of the electrode group 2 is electrically connected to the negative electrode terminal 16B through at least the negative electrode conductive member 20B. The conductive members 20 are made of a conductive material such as a metal. Examples of the conductive material included in the conductive members 20 include aluminum, stainless steel, copper, and iron. In one example, the pair of conductive members 20 is a pair of leads.

In each current collecting tab 15, a plurality of belt-shaped portions is stacked. In manufacturing the battery 1, before the current collecting tabs 15 are electrically connected to the corresponding one of the electrode terminals 16, the plurality of belt-shaped portions is bundled in each current collecting tab 15. Accordingly, with the plurality of belt-shaped portions being bundled, each of the current collecting tabs 15 is electrically connected to the corresponding one of the electrode terminals 16 via the corresponding one of the conductive members 20.

In the example in FIG. 1, the lid 6 is provided with a gas release valve 23 and a filling port (not shown). A sealing plate 25 for closing the filling port is welded on the outer surface of the lid 6. Note that the battery 1 is not necessarily provided with, for example, the gas release valve 23 and the filling port. In the inner cavity 10 of the outer container 5, the current collecting tabs (15A and 15B) and the pair of conductive members 20 are electrically insulated from the outer container 5 by one or more insulating members (not shown).

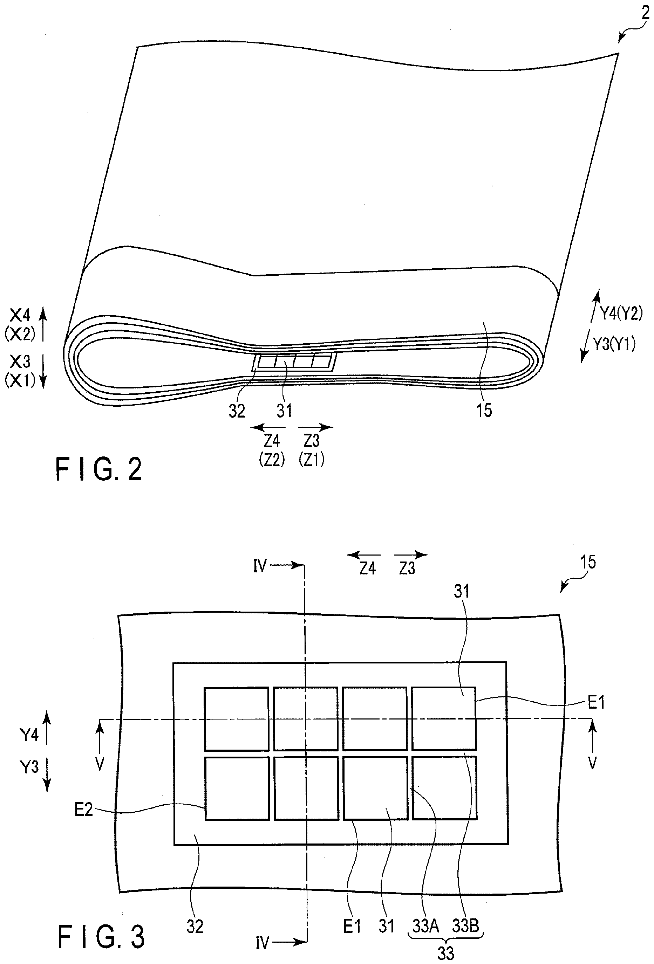

FIG. 2 shows one current collecting tab 15 and its surroundings in the electrode group 2. As shown in FIG. 2, in the electrode group 2, a protruding direction of the current collecting tab 15 (indicated by arrow Y3) and a direction opposite to the protruding direction of the current collecting tab 15 (indicated by arrow Y4) are defined. In the electrode group 2, a width direction (indicated by arrow Z3 and arrow Z4) intersecting (perpendicularly or substantially perpendicularly to) the protruding direction of the current collecting tab 15 and a thickness direction (indicated by arrow X3 and arrow X4) intersecting both the protruding direction of the current collecting tab 15 and the width direction are defined. The electrode group 2 has a dimension in the thickness direction smaller than a dimension in the protruding direction of the current collecting tab 15 and a dimension in the width direction.

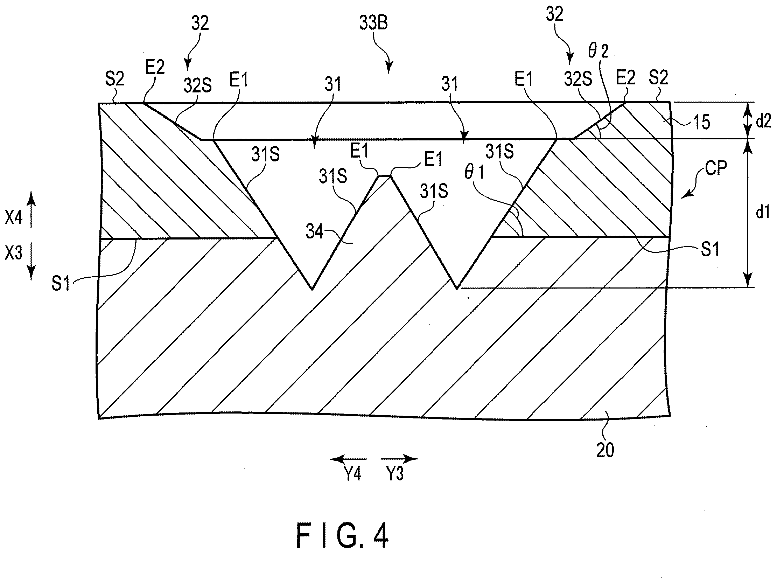

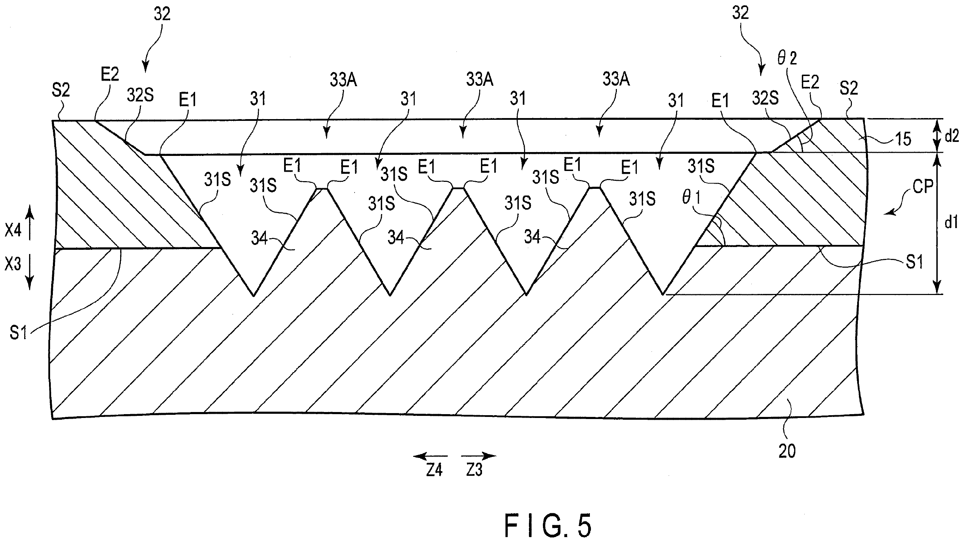

According to the example in FIG. 1, the electrode group 2 is placed in the inner cavity 10 of the battery 1 with the width direction coincides or substantially coincides with a height direction of the battery 1 and the thickness direction coincides or substantially coincides with a depth direction of the battery 1. As shown in FIG. 2, for example, the current collecting tab 15 is provided with a first recess 31 and a second recess 32. FIGS. 3 to 5 show the first recess 31 and the second recess 32 formed in a plurality of belt-shaped portions of the current collecting tab 15. In FIGS. 3 to 5, similarly to FIG. 2, the protruding direction of the current collecting tab 15, the direction opposite to the protruding direction of the current collecting tab 15, the width direction, and the thickness direction are defined in the electrode group 2. FIG. 4 is a cross-sectional view showing a cross-section taken along line IV-IV in FIG. 3. The cross-section is perpendicular or substantially perpendicular to the width direction of the electrode group 2. FIG. 5 is a cross-sectional view showing a cross-section taken along line V-V in FIG. 3. The cross-section is perpendicular or substantially perpendicular to the protruding direction of the current collecting tab 15.

As shown in FIGS. 2 and 3, the first recess 31 and the second recess 32 adjacent to the outer periphery side of the first recess 31 are formed in the current collecting tab 15. In one example, the first recess 31 and the second recess 32 is formed by ultrasonic welding or the like. As shown in FIG. 3, the first recess 31 includes an edge E1. The second recess 32 includes an edge E2. The outer edge of the first recess 31 is defined by the edge E1. The outer edge of the second recess 32 is defined by the edge E2. The edge E2 is placed on the outer periphery side of the edge E1 without being connected to the edge E1. That is, the second recess 32 is formed between the edge E1 and the edge E2. In one example, as shown in FIG. 3, the first recess 31 is formed into a rectangular shape or a substantially rectangular shape when viewed from one side in the thickness direction of the electrode group 2. The shape of the first recess 31 viewed from one side in the thickness direction of the electrode group 2 is not limited to a rectangular shape or a substantially rectangular shape and may be appropriately set according to an aspect of the current collecting tab 15 and the like.

In this embodiment, a plurality of first recesses 31 is formed in the current collecting tab 15. The plurality of first recesses 31 is close to each other. In one example, all of the plurality of first recesses 31 are gathered together. In this case, a first recess group is formed by all of the plurality of first recesses 31. The second recess is formed adjacent to the outer periphery side of the plurality of first recesses (first recess group). However, the adjacent first recesses 31 are not connected to each other. In other words, the edges E1 of the adjacent first recesses 31 are not connected to each other. Accordingly, an intermediate portion 33 is formed between the adjacent first recesses 31. The intermediate portion 33 extends between the edges E1 of the adjacent first recesses 31. Hereinafter, this embodiment will be described supposing that the plurality of first recesses 31 is shaped uniformly or substantially uniformly.

In this embodiment, the plurality of first recesses 31 is aligned in the protruding direction of the current collecting tab 15, and the plurality of first recesses 31 is aligned in the width direction. In the current collecting tab 15 according to the example in FIGS. 2 and 3, two first recesses 31 are aligned in the protruding direction of the current collecting tab 15 and four first recesses 31 are aligned in the width direction. In other words, eight first recesses 31 are formed in the current collecting tab 15 according to this example. When the plurality of first recesses 31 is aligned in both the protruding direction of the current collecting tab 15 and the width direction in this manner, some of the plurality of first recesses 31 are adjacent to each other in the protruding direction of the current collecting tab 15. Furthermore, some of the plurality of first recesses 31 are adjacent to each other in the width direction. For this reason, the intermediate portion 33 includes a portion 33A (first intermediate portion 33A) extending along the protruding direction of the current collecting tab 15 and a portion 33B (second intermediate portion 33B) extending along the width direction. In this embodiment, the intermediate portion 33 includes a plurality of first intermediate portions 33A and a plurality of second intermediate portions 33B. In the intermediate portion 33, the plurality of first intermediate portions 33A and the plurality of second intermediate portions 33B are connected to each other.

Note that the plurality of first recesses 31 may include a first recess 31 not adjacent to the second recess 32 depending on the arrangement of the plurality of first recesses 31. In this case, the second recess 32 is adjacent to at least some of the plurality of first recesses 31 from the outer periphery of all the first recesses 31.

As shown in FIGS. 4 and 5, the current collecting tab 15 has a connecting portion CP which is connected to the conductive member 20. In the connecting portion CP, a first surface S1 joined to the conductive member 20 is formed on the current collecting tab 15. In the connecting portion CP, a second surface S2 is formed on the current collecting tab 15 on the side opposite to the first surface S1 in a stacking direction of the current collecting tab 15 (thickness direction of the electrode group 2). In the connecting portion CP, the plurality of belt-shaped portions of the current collecting tab 15 is stacked between the first surface S1 and the second surface S2 in the stacking direction of the current collecting tab 15. In the example in FIGS. 4 and 5, the plurality of belt-shaped portions stacked on the current collecting tab 15 is formed in an integrated manner by, for example, ultrasonic welding. Accordingly, the second surface S2 is transformed, following the shapes of the first recesses 31 and the second recess 32.

As described above, in this embodiment, two first recesses 31 are aligned in the protruding direction of the current collecting tab 15 and four first recesses 31 are aligned in the width direction. In addition, the second recess 32 is formed adjacent to the outer periphery side of all of the eight first recesses 31. For this reason, FIG. 4 shows a cross-section of the two first recesses 31 and a cross-section of the second recess 32 according to the protruding direction of the current collecting tab 15. FIG. 5 shows a cross-section of the four first recesses 31 and a cross-section of the second recess 32 according to the width direction of the electrode group 2.

The first recesses 31 and the second recess 32 are recessed toward the conductive member 20 in the stacking direction of the current collecting tab 15. In one example, the first recesses 31 and the second recess 32 are formed toward the conductive member 20 by ultrasonic welding. The recession of the first recesses 31 and the second recess 32 connects the current collecting tab 15 and the conductive member 20. In the example in FIGS. 4 and 5, the conductive member 20 is provided with recesses corresponding to the first recesses 31 and the second recess 32.

The second recess 32 has a maximum recess depth smaller than that of the first recesses. The recess depth herein is a distance in the stacking direction of the current collecting tab 15 between a recessed point toward the conductive member 20 and an edge corresponding to the recessed point. The maximum recess depth of the first recesses 31 is a distance in the stacking direction of the current collecting tab 15 between the deepest point of the first recesses 31 and the edge E1. The maximum recess depth of the second recess 32 is a distance in the stacking direction of the current collecting tab between the deepest point of the second recess 32 and the edge E2. In the cross-section of FIG. 4, each first recess 31 includes two edges E1 which are shifted from each other in the stacking direction of the current collecting tab 15. In this case, the maximum recess depth of the first recess 31 is defined as a distance in the stacking direction of the current collecting tab 15 between the deepest point of the first recesses 31 and the edge E1 at the farthest point from the deepest point. The recess depth of the second recess 32 is a distance between the deepest point of the second recess 32 and the edge E2 in the stacking direction of the current collecting tab 15. In FIG. 4, the recess depth of the first recesses 31 is denoted by d1, and the recess depth of the second recess 32 is denoted by d2. As described above, d2 is less than d1 (d2 < d1).

In this embodiment, the first recesses 31 reach down to the conductive member 20. That is, a point where the first recesses 31 have the maximum recess depth (the deepest point of the first recesses 31) is located on the side where the conductive member 20 is located, with respect to the first surface S1 in the thickness direction. Herein, the point where the first recesses 31 have the maximum recess depth corresponds to a point in the first recesses 31 that is farthest from the edge E1 in the stacking direction of the current collecting tab 15.

In the cross-section shown in FIG. 4, each first recess 31 include a first inclined wall 31S. The first inclined wall 31S is formed over the entire circumference of each first recess. The first inclined wall 31S has a recess depth getting smaller toward the outer periphery side of each first recess 31 (the side on which the edge E1 corresponding to the first recess 31 is located). The second recess 32 includes a second inclined wall 32S. The second inclined wall 32S is formed over the entire circumference of the second recess. The second inclined wall 32S has a recess depth getting smaller toward the outer periphery side of the second recess 32 (the side on which the edge E2 corresponding to the second recess 32 is located). The first inclined wall 31S and the second inclined wall 32S are formed in this manner, so that the first inclined wall 31S and the second inclined wall 32S are inclined relative to a joint surface with the first surface S1. That is, the first inclined wall 31S and the second inclined wall 32S are inclined relative to the first surface S1.

In the cross-section shown in FIG. 4, the second inclined wall 32S has an inclination smaller than that of the first inclined wall 31S. The inclination herein represents the degree of inclination of the inclined wall (the first inclined wall 31S or the second inclined wall 32S) relative to the joint surface with the first surface S1. In other words, the inclination is the degree of inclination of the inclined wall relative to the first surface S1. In the example in FIG. 4, the inclination of the first inclined wall 31S is represented by angle 91. The inclination of the second inclined wall 32S is represented by angle θ2. In this embodiment, θ2 is smaller than θ1 (θ2 < 81).

The cross-section of FIG. 5 also shows that the first inclined wall 31S of each first recess 31 has a recess depth getting smaller toward the outer periphery side of each first recess 31. In addition, the second inclined wall 32S of the second recess 32 has a recess depth getting smaller toward the outer periphery side of the second recess 32. The first inclined wall 31S and the second inclined wall 32S are inclined relative to the conductive member 20, that is, the first surface S1. The recess depths d1 and d2 and the inclinations θ1 and θ2 are defined similarly to FIG. 4. In the cross-sections shown in FIGS. 4 and 5, a certain first recess 31 preferably has an angle formed by the first inclined wall 31S set at 90 degrees or less. In forming the plurality of first recesses 31, all of the plurality of first recesses 31 preferably have an angle formed by the first inclined wall 31S set at 90 degrees or less.

As described above, in this embodiment, the plurality of first recesses 31 is formed close to each other in the current collecting tab 15. For this reason, as shown in FIGS. 4 and 5, a protrusion 34 protruding toward the side opposite to the conductive member 20 in the stacking direction of the current collecting tab 15 is formed between adjacent first recesses 31. The protrusion 34 is formed between the first inclined walls 31S of the adjacent first recesses 31 in both the protruding direction of the current collecting tab 15 and the width direction. In a state shown in FIG. 3, a protruding end of the protrusion 34 forms the intermediate portion 33 (the first intermediate portion 33A or the second intermediate portion 33B). The protruding end of the protrusion 34 is located closer to the conductive member 20 than a point where the second recess 32 has the maximum recess depth. Herein, the point where the second recess 32 has the maximum recess depth corresponds to a point in the second recess 32 farthest from the edge E2 in the stacking direction of the current collecting tab 15. When a plurality of protrusions 34 is formed on the current collecting tab 15 as in this embodiment, it is preferable that all protruding ends of the plurality of protrusions 34 be located on the side closer to the conductive member 20 than the deepest point of the second recess 32 (the point where the second recess 32 has the maximum recess depth).

The first recesses 31 and the second recess 32 are formed in the connecting portion between one current collecting tab (15A or 15B) and the corresponding conductive member 20. Therefore, in a manufacturing method of the battery 1, the first recesses 31 and the second recess 32 are formed when connecting the conductive member 20 and the current collecting tab 15. In one example, the electrode terminals 16 (16A and 16B) are disposed in the container member 3. Next, an active material-containing layer is supported on the corresponding current collector (14A or 14B) of the electrode group 2, and the current collecting tab 15 is formed as a portion where the active material-containing layer is not supported on the corresponding current collector (14A or 14B). The first recesses 31 recessed toward the conductive member 20 is formed in the connecting portion CP between the current collecting tab 15 and the conductive member 20. In addition, the second recess 32 recessed toward the conductive member 20 and having the recess depth smaller than that of the first recesses 31 is formed adjacent to the outer periphery side of the first recesses 31. Accordingly, the conductive member 20 and the current collecting tab 15 are electrically connected to each other.

In this embodiment, the first recesses 31 and the second recess 32 are formed in the current collecting tab 15 disposed in the corresponding current collector (14A or 14B) of the electrode group 2. The first recesses 31 are formed in the connecting portion between the current collecting tab 15 and the conductive member 20 and are recessed toward the conductive member 20. The second recess 32 is adjacent to the outer periphery side of the first recesses 31, being recessed toward the conductive member 20, and having a maximum recess depth smaller than that of the first recesses 31.

The first recesses 31 and the second recess 32 are formed by, for example, ultrasonic welding. Formation of both the first recesses 31 and the second recess 32 alleviates stress concentration applied to the current collecting foil or the like forming the current collecting tab 15. That is, reduction in amount of transformation of the current collecting foil or the like effectively prevents breakage of the current collecting foil or the like. In addition, compared with a case where only the first recesses 31 are formed, a broad range of the current collecting foil or the like is pressed by the second recess 32, which prevents wrinkles in the current collecting tab 15. Furthermore, joining the current collecting tab 15 and the conductive member 20 with both the first recesses 31 and the second recess 32 effectively prevents uplift of the current collecting tab 15 from the conductive member 20. Accordingly, formation of the first recesses 31 and the second recess 32 prevents a decrease in strength of the current collecting tab 15 at the time of joining the current collecting tab 15 and the conductive member 20. This makes it possible to enhance, for example, durability during joining such as vibration resistance of the current collecting tab 15.

In this embodiment, each first recess 31 includes the first inclined wall 31S, and the second recess 32 includes the second inclined wall 32S. The first inclined wall 31S has a recess depth getting smaller toward the outer periphery side of the first recesses 31. The second inclined wall 32S has a recess depth getting smaller toward the outer periphery side of the second recess 32. Furthermore, the second inclined wall 32S has an inclination smaller than that of the first inclined wall 31S. Such a configuration makes it possible to prevent a decrease in strength of the current collecting tab 15 more reliably when joining the current collecting tab 15 and the conductive member 20.

In this embodiment, the plurality of first recesses 31 is formed close to each other. The second recess is formed on the outer periphery side of the plurality of first recesses. Such a configuration makes it possible to prevent a decrease in strength of the current collecting tab 15 even more reliably when joining the current collecting tab 15 and the conductive member 20.

In this embodiment, the first recesses 31 reach down to the conductive member 20 in the thickness direction. Accordingly, the current collecting tab 15 and the conductive member 20 are joined to each other more sufficiently.

### (Modification)

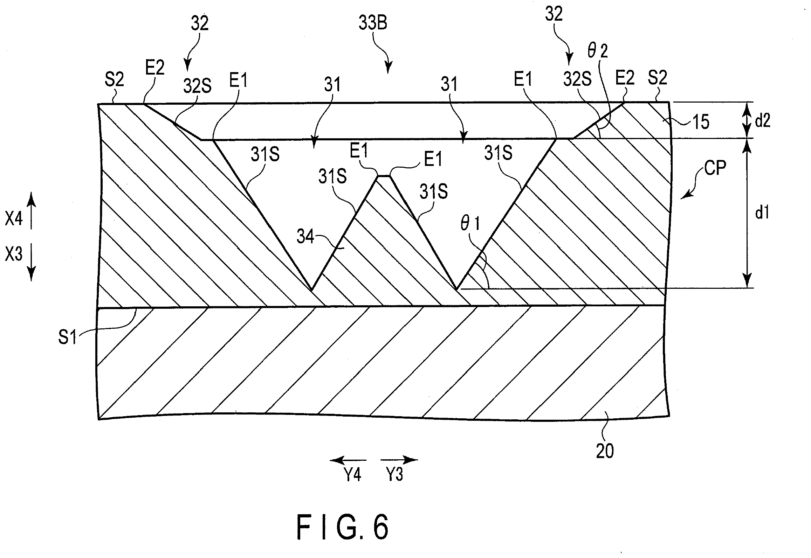

As shown in FIG. 6, as a modification, a conductive member 20 is not necessarily provided with a first recess 31. That is, the first recess 31 is formed only in a current collecting tab 15 in a connecting portion CP. In this modification, a point where the first recess 31 has the maximum recess depth is located on the side where the current collecting tab 15 is located, with respect to a first surface S1 in a thickness direction. Even in this modification, a second recess 32 is adjacent to the outer periphery side of the first recess 31 and is recessed toward the conductive member 20 and has a maximum recess depth smaller than that of the first recess 31. Accordingly, this modification also achieves similar functions and effects as those of the embodiment and the like.

In another modification, an electrode group 2 may be placed in an inner cavity 10 of a battery 1 with a width direction coincides or substantially coincides with a lateral direction of the battery 1 and a thickness direction coincides or substantially coincides with a depth direction of the battery 1. In this case, a protruding direction of a current collecting tab 15 coincides or substantially coincides with a direction in the height direction of the battery 1 where a lid 6 is placed. As in Reference 1 (Jpn. Pat. Appln. KOKAI Publication No. 2012-209260), a positive electrode current collecting tab 15A and a negative electrode current collecting tab 15B in the electrode group 2 protrude toward the same side.

Note that the container member of the battery 1 is not limited to the configuration provided with the outer container 5 and the lid 6. In another modification, as in Reference 2 (International Publication No. 2016/204147), a container may include metallic first and second container members. In this case, the first container member includes a bottom wall and a peripheral wall, and in the first container member, a flange protrudes toward the outer periphery from an end of the peripheral wall on a side opposite to the bottom wall. The second container member is attached to the flange of the first container member. In another modification, a container of a battery may include a laminate film having a three-layer structure in which a metal layer is sandwiched between resin layers. In any of these modifications, a first recess 31 and a second recess 32 are formed in a current collecting tab 15 in a similar manner to any of the embodiment and the like.

In another modification, a plurality of first recesses 31 is not shaped uniformly or substantially uniformly. In this case, a second recess 32 is formed having a maximum recess depth smaller than maximum recess depths defined in the plurality of first recesses 31. That is, the largest maximum recess depth of the maximum recess depths defined in the plurality of first recesses 31 is larger than the maximum recess depth of the second recess 32.

According to at least one of these embodiments, a first recess is formed in a connecting portion between a current collecting tab and a conductive member and is recessed toward the conductive member. A second recess is adjacent to the outer periphery side of the first recess and is recessed toward the conductive member, having a maximum recess depth smaller than that of the first recess. Accordingly, it is possible to provide a battery capable of preventing a decrease in strength of the current collecting tab due to joining.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A battery comprising:
a container member;
an electrode terminal disposed in the container member;
an electrode group housed in an inner cavity of the container member, the electrode group including a current collector and an active material-containing layer supported on the current collector, and the current collector including a current collecting tab on which the active material-containing layer is not supported;
a conductive member electrically connecting the electrode terminal and the current collecting tab;
a first recess recessed toward the conductive member in a connecting portion between the current collecting tab and the conductive member; and
a second recess recessed toward the conductive member on an outer periphery side of the first recess, the second recess having a maximum recess depth smaller than a maximum recess depth of the first recess.

2. The battery according to claim 1, wherein
the current collecting tab includes a first surface joined to the conductive member in the connecting portion between the current collecting tab and the conductive member, and a second surface formed on a side opposite to the first surface in the connecting portion, and
the second surface is provided with the first recess and the second recess.

3. The battery according to claim 1 or 2, wherein
the first recess includes a first inclined wall having a recess depth getting smaller toward the outer periphery side of the first recess 31, and
the second recess includes a second inclined wall having a recess depth getting smaller toward an outer periphery side of the second recess 32, the second inclined wall having an inclination smaller than an inclination of the first inclined wall relative to the conductive member.

4. The battery according to any one of claims 1 to 3, wherein
the connecting portion is provided with a plurality of first recesses being close to each other, and
the second recess is formed on an outer periphery side of the plurality of first recesses.

5. The battery according to claim 4, wherein
the plurality of first recesses adjacent to each other form a protrusion protruding toward a side opposite to the conductive member.

6. The battery according to claim 5, wherein
the protrusion has a protruding end located closer to the conductive member than a point where the second recess has the maximum recess depth.

7. The battery according to any one of claims 1 to 6, wherein
the first recess is formed into a rectangular shape when viewed from a side opposite to the conductive member.

8. The battery according to any one of claims 1 to 7, wherein
the first recess and the second recess are formed by ultrasonic welding.

9. The battery according to any one of claims 1 to 8, wherein
the first recess reaches down to the conductive member.

10. A manufacturing method comprising:
disposing an electrode terminal in a container member;
housing an electrode group in an inner cavity of the container member;
supporting an active material-containing layer on a current collector of the electrode group;
forming a current collecting tab as a portion where the active material-containing layer is not supported on the current collector;
electrically connecting the electrode terminal and the current collecting tab by a conductive member;
recessing a first recess toward the conductive member in a connecting portion between the current collecting tab and the conductive member; and
recessing a second recess toward the conductive member on an outer periphery side of the first recess with the second recess having a recess depth smaller than a recess depth of the first recess.

11. The manufacturing method according to claim 10, wherein
forming the first recess includes recessing the first recess toward the conductive member by ultrasonic welding, and
forming the second recess includes recessing the second recess toward the conductive member by ultrasonic welding.
